# EUROPEAN PATENT SPECIFICATION

(11) **EP 1 247 454 B1**
(45) Date of publication and mention of the grant of the patent: **07.04.2010**
(21) Application number: 00974877.3
(22) Date of filing: 13.11.2000
(51) Int. Cl.: A23G 3/02, A23P 1/12, B29C 47/40

(54) **KNEADING DEVICE**
KNETVORRICHTUNG
DISPOSITIF DE MALAXAGE

(43) Date of publication of application: 09.10.2002
(60) Divisional application: 08102458.0
(73) Proprietor: MORINAGA & CO., LTD., Tokyo 108-8403 (JP)
(72) Inventor: KIMURA, Tsuguo, Yamato-shi, Kanagawa 242-0011 (JP); MASUKAWA, Sumio, Yokohama-shi, Kanagawa 225-0002 (JP); OHNO, Yoshihiro, Tokyo 108-0074 (JP); KANAI, Akishige, Minoo-shi, Osaka 562-0031 (JP)
(74) Representative: Ilgart, Jean-Christophe
(86) International application number: PCT/JP2000/007900
(87) International publication number: WO 2002/037978

(56) References cited:
- EP-A- 0 195 702
- EP-A- 0 806 518
- WO-A1-87/01911
- DE-A1- 2 744 583
- JP-A- 1 128 750
- JP-A- 6 022 674
- JP-A- 8 009 887
- JP-A- 8 238 051
- JP-A- 58 205 476
- JP-A- 62 269 736
- JP-A- 63 258 527
- JP-B1- 33 002 095
- JP-U- 1 127 446
- JP-U- 52 068 469
- JP-Y1- 45 017 574
- US-A- 4 110 844
- US-A- 4 199 263
- US-A- 5 000 900
- US-A- 5 472 733

## Description

### Technical Field

The present invention relates to a kneading device which is suitable for producing confectionery such as a soft candy. In particular, the present invention relates to a kneading device which makes possible a continuous production of such confectionery.

### Background Art

Recently, soft candies are being marketed that have superior softness when initially chewed and do not adhere to the teeth. Such soft candies may be produced by, for instance, the following process:
a first step in which a saccharide, water, vegetable oil, and emulsifier are mixed and emulsified to prepare a soft candy base raw material liquid;
a second step in which the soft candy base raw material liquid is boiled down to obtain a high viscosity raw material which is used as a soft candy base;
a third step in which after mixing and boiling down sucrose, water, and glucose syrup, the mixture is cooled and crystals are precipitated to obtain a fine sucrose crystal composition;
a fourth step in which a low viscosity raw material including the fine sucrose crystal composition obtained in the third step is added to and mixed with the high viscosity raw material (the soft candy base) obtained in the second step to obtain a high viscosity mixture (i.e., a raw material mixture);
a fifth step in which saccharide, water, and foaming protein such as gelatin are mixed and whipped to obtain a frappe;
a sixth step in which a secondary raw material such as the frappe obtained in the fifth step is added to and mixed with the mixture (the raw material mixture), which is obtained in the fourth step and is used as a primary raw material, to obtain a soft candy composition in which a large amount of air is included to give a characteristic of a soft candy; and,
a seventh step in which two kinds of the soft candy compositions having different flavor are prepared in the sixth step, and they are formed into a product by wrapping one of the soft candy compositions with the other one of the soft candy compositions.

In the production process mentioned above, since it is difficult to sufficiently carry out a mixing (mulling) process and, at the same time, continuously convey the resultant mixture, especially in the fourth step in which the low viscosity raw material including the fine sucrose crystal composition is added to and mixed with the high viscosity raw material (the soft candy base) to obtain the high viscosity mixture (the raw material mixture), a batch type production process is conventionally adopted and a continuous production process is not employed.

Also, for the same reason as above, a batch type production process is adapted for the sixth step in which the secondary raw material such as the frappe is added to and mixed with the mixture (the raw material mixture) to obtain a soft candy composition, and a continuous production process is not utilized.

Moreover, in the seventh step in which one of the materials is wrapped up by the other to be formed into a product, a method is adopted in which an extrusion instrument, for instance, an extruder, is used and the nozzle thereof is made duplex to form the product, or in which the product is prepared by hand.

However, since the raw material to be mixed (mulled) deteriorates over time and the physical properties of the products differ at the initial production stage and at the final production stage if the batch type production process is employed for the above-mentioned fourth or sixth step, it becomes necessary to adjust the conditions such as temperature or time in the subsequent steps in order to eliminate the effect of the difference over time. Accordingly, production control becomes complicated, and this is one of the factors which reduces productivity.

In order to solve the above problems, although attempts have been made and experiments have been conducted to prepare a product by using a kneading device such as a single axial or twin axial extruder or onrator, a desired kneaded material could not be obtained due to such factors as heat generated during the kneading process. That is, the characteristics of soft candy which has superior softness when initially chewed and which is resistant to adhering to the teeth is obtained mainly in the above-mentioned sixth step, and in the fourth step in which a large quantity of air is incorporated into the mixture. However, in the above-mentioned kneading device, the amount of air incorporated into the mixture becomes insufficient due to such factors as heat generated in the mixing process, and as a result, a mixture having desired properties cannot be obtained.

Also, as for the above-mentioned seventh step, if the method is employed in which an extrusion instrument such as an extruder is used and the nozzle thereof is made duplex to form the product, there are certain limits in the working conditions: for instance, if a raw material is used whose content of fats and oils is, for example, 8% or more, it generates oil stains. Moreover, if the method in which the product is manually prepared is employed, the wrapping amount of the product, and hence, the quality of the product may differ from one product to another. Accordingly, it is not suitable for use in a continuous production process.

The present invention takes into consideration the above-mentioned circumstances, with the object of providing a kneading device which makes possible the introduction of air into the mixture and the continuous conveyance of the mixture while a mixing process is being carried out, as well as providing a ropesizer which is capable of continuously forming a product by wrapping one of the raw material with the other which are continuously conveyed from the above-mentioned kneading device.

DE-A-27 44 583 discloses an extruder according to the first part of claim 1, but in which the mixing pins on the rotating screws are not inclined and very little space inside the casing is available for the kneaded matter compared to the volume of the screws.

### Disclosure of the Invention

The kneading device as set forth in claim 1 is a kneading device which kneads a raw material of high viscosity and a raw material of low viscosity and continuously delivers a raw material mixture obtained, including: a casing; a pair of screw shafts disposed parallel to each other in the casing; and, a driving unit for rotating the screw shafts, wherein a helical portion is formed at one end of the pair of screw shafts so that the raw material is conveyed from one end of each of the pair of screw shafts to the other end, and a plurality of mixing pins is provided with the other end side of the screw shaft with regard to the helical portion in the circumferential direction of the screw shaft;
wherein a mixing pin is provided at the inside of the casing;
the plurality of mixing pins provided with the pair of screw shafts are arranged at a height so that they overlap with each other between the pair of screw shafts in such a manner that they do not interfere with each other; an overlapping portion of the mixing pins between the pair of screw shafts is equal to or less than a half of the height of the mixing pin; characterized in that the plurality of mixing pins are formed in a flat plate shape and are obliquely disposed with respect to a rotation axis of the screw shaft so that the surfaces of the mixing pins facing the other end of the screw shaft face the rotation direction of the screw shaft, and a cover for sealing the inside of the casing is provided with the casing so that 5 - 50% of the inside volume of the sealed space is empty.

### Brief Description of Drawings

FIG. 1 is a plan view showing a schematic structure of an embodiment of a kneading device as set forth in claim 1 of the present invention.
FIG. 2 is a plan view showing the kneading device shown in FIG. 1 in a state in which a cover thereof is closed.
FIG. 3 is a diagram showing a schematic structure of a casing of the kneading device as shown in FIG. 1, and 3(a) is a plan view and 3(b) is a side view
FIG. 4 is an enlarged view showing a main portion for explaining an overlap state of mixing pins.
FIG. 5 is a side view showing a schematic structure of a main portion of the kneading device shown in FIG. 1.

### Best Mode for Carrying Out the Invention

In the following, the present invention will be explained in detail.

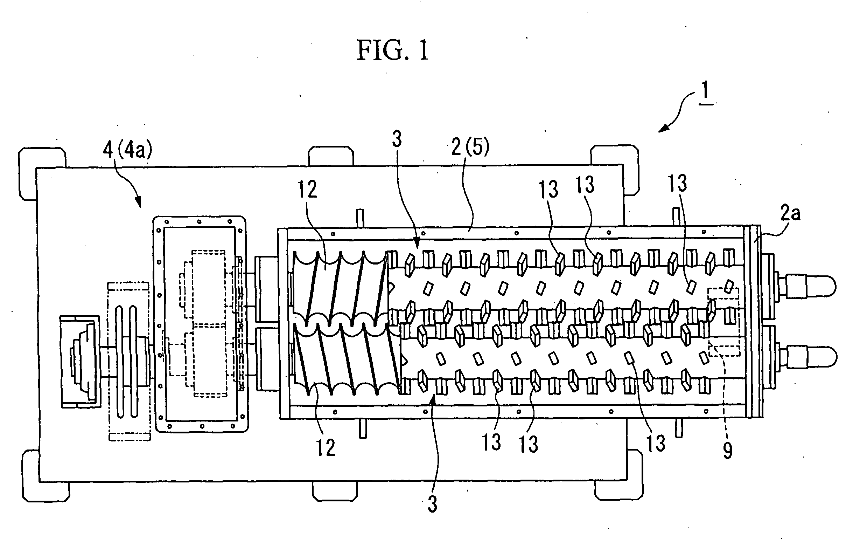

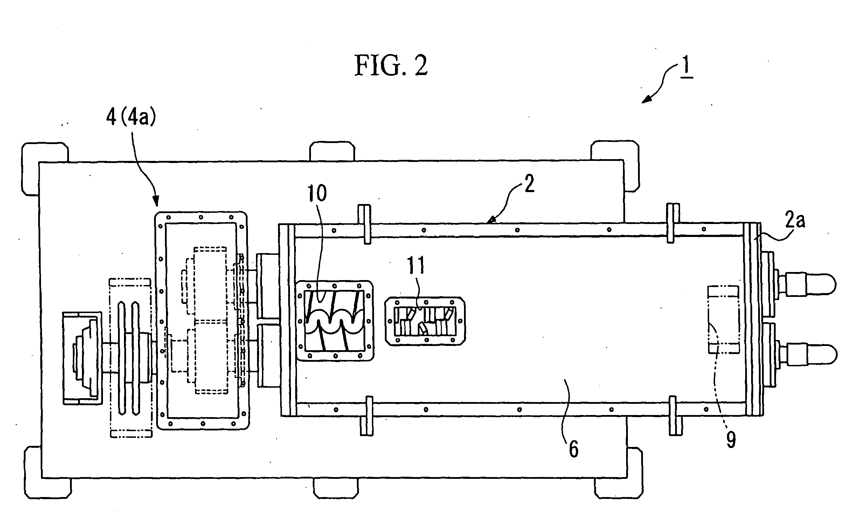

FIGS. 1 and 2 are diagrams showing an embodiment of the kneading device according to claim 1 of the invention, and the kneading device is indicated by the numeral 1 in these figures. The kneading device 1 is suitably used especially in the production of the above-mentioned soft candy which has a characteristic of superior softness when initially chewed and is resistant to adhering to the teeth, and for instance, the kneading device 1 is used for mixing the soft candy base which is a high viscosity raw material with the low viscosity raw material including fine sucrose crystals while continuously conveying the obtained raw material mixture.

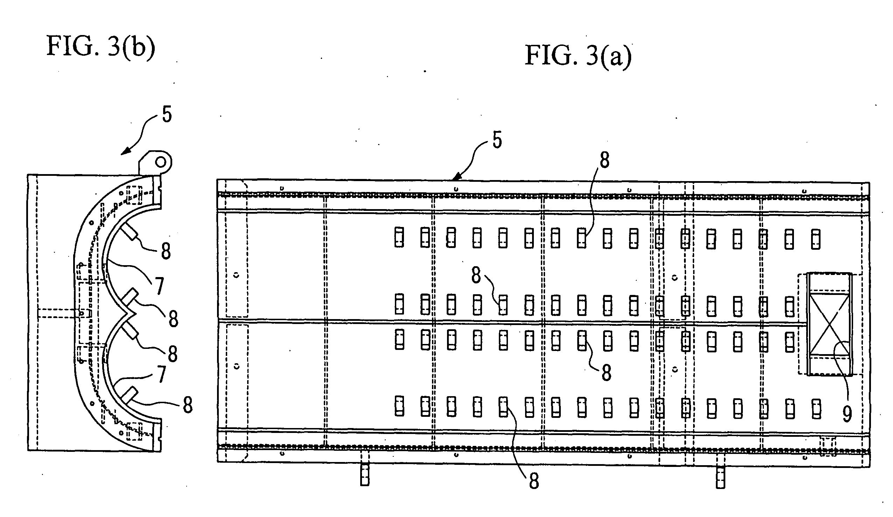

The kneading device 1, as shown in FIG. 1, includes a casing 2, a pair of screw shafts 3 and 3 which are provided in the casing 2 so as to be parallel to each other, and a driving unit 4 for rotating the screw shafts 3 and 3. The casing 2 includes a casing body 5 which is rectangular in plan view as shown in FIG. 3(a), and has a side view of two continuous semicircles as shown in FIG. 3(b), and a cover 6 for covering the upper portion of the opening thereof as shown in FIG. 2.

The casing body 5 includes two groove portions 7 and 7 as shown in FIG. 3(b) which are parallel with respect to the longer side of the rectangular plane shown in FIG. 3(a) in order to accommodate the pair of the screw shafts 3 and 3 in parallel to each other. Also, a number of mixing pins 8 of flat plate shape is disposed in an oriented manner inside the casing body 5 as shown in FIGS. 3(a) and 3(b). These mixing pins 8 are disposed so that the front and the back of each mixing pin 8 face the longer side of the casing body 5. In addition, an outlet 9, from which a raw material mixture obtained by mixing the above-mentioned high viscosity raw material and the low viscosity raw material are discharged, is formed at one end, i.e., the downstream side of the casing body 5, as will be described later.

The above-mentioned cover 6, although not shown in the figures, has almost the same structure as the casing body 5 and has a rectangular plan view and a side view of two continuous semicircles so that the above-mentioned screw shafts 3 and 3 may be accommodated in groove portions thereof (not shown in the figures) when it is associated with the casing body 5. Also, as shown in FIG. 2, a high viscosity raw material introduction opening 10 and a low viscosity raw material introduction opening 11 are formed at an upstream side of the cover 6, i.e., the opposite side of the above-mentioned outlet 9 of the casing body 5. Note that a number of mixing pins (not shown in the figures) is also provided with the cover 6, similarly to the casing body 5.

As shown in FIG. 1, each of the screw shafts 3 and 3 is disposed along the above-mentioned groove portions 7 and 7, respectively, of the casing body 5 in parallel to each other. One end (upstream side) of each of the screw shafts 3 and 3 is coupled with the above-mentioned driving unit 4 and the other end (downstream side) thereof is rotatably supported by a side plate 2a of the casing 2. These screw shafts 3 and 3, although not particularly limited, are constructed so as to rotate inwardly from the upper direction to the lower direction in this embodiment. As can be seen from the position of the high viscosity raw material introduction opening 10 and the low viscosity raw material introduction opening 11 shown in FIG. 2, each of the raw materials is introduced/supplied between the pair of the screws 3 and 3. Also, a helical portion 12 is formed at one end of each of the pair of screw shafts 3 and 3 so that the above-mentioned raw materials may be transferred from one end to the other, and the mixing pins 13 are arranged in the circumferential direction of the screw shaft 3 in the region closer to the other end with respect to the helical portion 12.

The helical portion 12, as shown in FIG. 2, is principally disposed under the above-mentioned high viscosity raw material introduction opening 10 of the cover 6 of the casing 2, and transfers the high viscosity raw material introduced from the high viscosity raw material introduction opening 10 towards the downstream side. In this embodiment, the helical portions 12 and 12 of the pair of screw shafts 3 and 3 are disposed, as shown in FIG. 1, in a staggered manner with respect to their convex and concave portions so that they do not interfere with each other and so that the high viscosity raw material supplied to the concave portion thereof may be conveyed to the downstream side when they are rotated in that state, as will be described later.

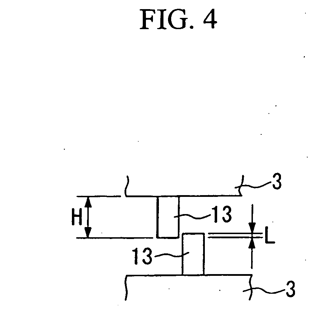

The mixing pins 13 are disposed in the region from the underneath of the above-mentioned low viscosity raw material introduction opening 11 of the cover 6 of the casing 2 to the outlet 9 of the casing body 5, and they are of a flat plate shape having the same size and shape as the above-mentioned mixing pins 13 provided with the casing body 5. These mixing pins 13 are arranged at a height where they overlap with each other between the screw shafts 3 and 3 in such a manner that they do not interfere with each other. As shown in FIG. 4, the overlapping portion L of the mixing pins 13 between the screw shafts 3 and 3 is equal to or less than a half of the height H of the mixing pin 13 and is about 1/10 of the height H of the mixing pin 13 in this embodiment. The reason why the overlapping portion L is designed to be equal to or less than the height H of the mixing pin 13 is to prevent the denaturing of the raw materials or the insufficiency in the incorporation of air from occurring due to, as will be described later, generation of heat by the excessive pressure applied to the raw materials when the raw materials are mixed.

Also, the mixing pins 13 are disposed so as to be oblique with respect to the rotation axis (central axis) of the screw shaft 13. That is, in this embodiment, the mixing pins 13 are disposed with their front and back surfaces inclined at 60° with respect to the rotation axis of the screw shaft 3. Moreover, the inclined direction of the mixing pins 13, which are disposed in an oblique manner as mentioned above, is predetermined with respect to the rotary direction of the screw shaft 3. That is, the mixing pins 13 are disposed so that their surfaces facing the other end of the screw shaft 13 (the surface facing the outlet 9 side of the casing body 5) face the rotary direction of the screw shaft 3. Accordingly, the raw materials supplied between the screw shafts 3 and 3 are conveyed towards the downstream side, i.e., the outlet 9, side by being pressed by the above-mentioned surfaces of the mixing pins 13 facing the other end (the surfaces facing the outlet 9 side of the casing body 5).

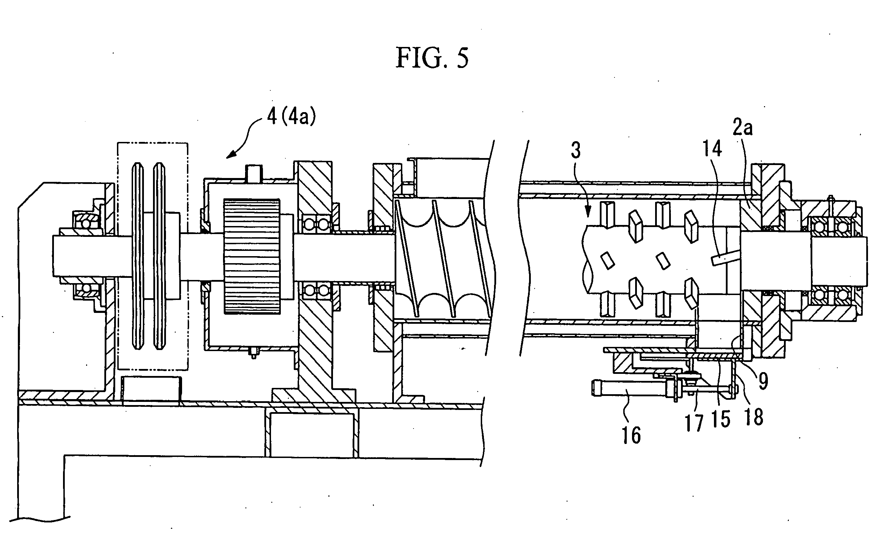

Moreover, as shown in FIG. 5, a wiping plate 14, which is used to wipe off the raw materials conveyed by the screw shaft 3, is disposed at the other end portion of the above-mentioned screw 3. The wiping plate 14 is disposed so that the one end portion thereof makes contact with the inside surface of the side plate 2a of the casing 2, and is inclined towards the opposite side of the above-mentioned mixing pin 13. Further, the surface of the wiping plate 14 which is opposite the surface thereof facing the above-mentioned side plate 2a, i.e., the surface facing the upstream side, is disposed so as to face the rotary direction of the screw shaft 3. According to this structure, the raw materials, which are supplied between the screw shafts 3 and 3 are conveyed towards the side plate 2a by being pressed by the mixing pins 13, drop into the outlet 9 disposed below by their own weight when they are wiped off from the inside surface of the side plate 2a by being pushed by the surface of the wiping plate 14 facing the upstream side.

The outlet 9 is formed by an opening penetrating the casing body 5, and a shutter 15 which covers the outside, i.e., the lower side, opening of the outlet in an openable - closable manner. The shutter 15 is attached to a piston 17 of an air-cylinder 16, which is attached to the casing body 5, via a bracket 18. The shutter 15 opens and closes the outlet 9 in accordance with the actuation of the air-cylinder 16.

The driving unit 4, as mentioned above, supports one end (upstream side) of the screw shafts 3 and 3, and rotates them in that state. The driving unit 4 has a known, conventional structure and includes a motor (not shown in the figures), and a transmittance means 4a which transmits the rotary force of the motor to the screw shafts 3 and 3.

In the kneading device 1 having the above-described structure, the size of the screw shafts 3 and 3 is determined to be relatively small so that 5 - 50%, preferably 20 - 45%, more preferably 30 - 40% of the volume inside the casing 2 is available as space. In this manner, the generation of excessive heat from the raw materials due to such factors as friction may be prevented when the raw materials are mixed by the screw shafts 3 and 3.

When the soft candy base, which is a high viscosity raw material, and the low viscosity raw material including the fine sucrose crystal are mixed by using the kneading device 1 having the above-mentioned structure, the cover 6 of the casing body 5 and the above-mentioned shutter 15 are first closed, and then each of the screw shafts 3 and 3 is rotated at a predetermined speed. After that, in this state of the device, the high viscosity raw material and the low viscosity raw material are introduced into the device from the high viscosity raw material introduction opening 10 and the low viscosity raw material introduction opening 11, respectively.

Then, pressure is applied to the high viscosity raw material, which is introduced between the helical portions 12 and 12 of the inwardly rotating screw shafts 3 and 3, and is proceeded forward by the action of the convex portions of the helical portions 12 in a kneaded state to some extent towards the region where the mixing pins 13 are disposed. Also, the low viscosity raw material, which is directly introduced to the region where the mixing pins 13 are disposed, is mixed with the high viscosity raw material, which has been kneaded to some degree, and is kneaded further by the mixing pins 8 of the casing body 5 and the mixing pins (not shown in the figures) of the cover 6.

At that time, since the overlapping portion of the mixing pins 13 between the pair of screw shafts 3 and 3 is sufficiently small as mentioned above, it is possible to prevent an excessive pressure being applied to each of the raw materials. Accordingly, the denaturing of the raw materials or the insufficient incorporation of air due to the generation of heat are prevented. Also, since 5 - 50%, preferably 20 - 45%, and more preferably 30 - 40% of the volume inside the casing 2 is space, the generation of excessive heat from the raw materials due to such factors as friction during a kneading process is prevented.

Each of the raw materials kneaded by the mixing pins 13, etc., in the above-mentioned manner, is traveled forward by the mixing pins 13 while its degree of mixing is increased by the kneading process. That is, since the surface of the mixing pin 13 at the downstream side is obliquely disposed so as to face the rotary direction of the screw shafts 3 and 3 as mentioned above, the raw materials are conveyed towards the downstream side by the rotation of the screw shafts 3 and 3 while being pressed by the surface of the mixing pin 13 facing the downstream side.

In this manner, the raw materials are gradually conveyed towards the downstream side. When the raw material at the front is conveyed to the side plate 2a side (the outlet 9 side) of the casing 2 and a predetermined amount of the raw materials, i.e., the raw material mixture including the sufficiently kneaded high viscosity raw material and low viscosity raw material, is collected, the shutter 15 is opened by actuating the above-mentioned air-cylinder 16. Then, the raw material mixture collected at the side plate 2a side is wiped off from the inside surface of the side plate 2a by the operation of the above-mentioned wiping plate 14, and drops into the outlet 9 disposed below by the weight thereof. The dropped raw materials are continuously conveyed by a belt conveyer (not shown in the figures) placed below the outlet 9 to the subsequent process.

Note that although the shutter 15 is initially closed in order to collect the predetermined amount of the raw material mixture, it is opened until the kneading process is completed after the predetermined amount of the raw material mixture is once collected and discharged. In this manner, a desired amount of the raw material may be continuously kneaded and sent to the subsequent process.

In the above-mentioned kneading device 1, since the helical portion 12 and the number of mixing pins 13 are provided with each of the pair of the screw shafts 3 and 3 and each of the screw shafts 3 and 3 is rotated inwardly from top to bottom, it becomes possible to continuously convey the raw material mixture from one end of the screw shafts 3 and 3 to the other end thereof while the high viscosity raw material and the low viscosity raw material are kneaded by the helical portions 12 and the mixing pins 13.

Also, since the mixing pins 8 are provided inside the casing body 5 as well as the inside of the cover 6 (mixing pins thereof are not shown in the figures), the kneading process for the raw materials is efficiently carried out in association with the mixing pins 13 provided with the screw shafts 3 and 3.

Moreover, since the height of the mixing pin 13 provided with the screw shafts 3 and 3 is adjusted so that the mixing pins 13 of the different screw shafts 3 and 3 overlap each other, the kneading effect of the device may be improved.

Further, since the overlapping portion of the mixing pins 13 between the screw shafts 3 and 3 is designed to be equal to or less than the height of the mixing pin, it becomes possible to prevent the denaturing of the raw material or the insufficient incorporation of the air due to an excessive pressure applied to the raw materials when the high viscosity raw material and the low viscosity raw material are kneaded.

In addition, since the mixing pins 13 are formed into a flat plate shape and these are disposed so as to be oblique with respect to the rotation axis of the screw shaft 3 and the surface thereof faces the other end of the screw shaft 3 with respect to the rotation direction of the screw shaft 3, i.e., the outlet 9 side, the raw material supplied between the screw shafts 3 and 3 may be pressed towards the outlet 9 side while being kneaded by the mixing pins I3. Accordingly, it becomes possible to continuously convey the raw material towards the outlet 9 side.

Also, since the high viscosity raw material introduction opening, through which the raw material is supplied between the pair of the screw shafts 3 and 3, and the low viscosity raw material introduction opening are separately provided, in particular because the high viscosity raw material introduction opening is disposed at the upstream side, it becomes possible to enhance the degree of mixing of the raw materials by adding the low viscosity raw material to the high viscosity raw material which has been kneaded in advance.

Moreover, since the outlet 9 for discharging the raw material mixture is disposed at a position below the other end portion of the screw shafts 3 and 3 of the casing body 5 of the casing 2 and the wiping plate 14 for wiping off the raw material mixture conveyed by the screw shafts 3 and 3 into the outlet 9 is disposed at the other end portion of the screw shafts 3 and 3, it becomes possible to automatically and continuously wipe off the raw material mixture obtained by the kneading process by using the wiping plate 14 so that the mixture drops into the outlet 9. Accordingly, the process may be reliably continued in the subsequent process by using such means as a belt-conveyer which connects the outlet 9 to the subsequent process.

Further, since the casing 2 is constructed so that 5 - 50%, preferably 20 - 45%, and more preferably 30 - 40% of the volume inside thereof is available as space, it becomes possible to prevent the denaturing of the raw materials or the insufficient incorporation of air due to the generation of excessive heat caused by such factors as friction during the kneading process.

### Industrial Applicability

As explained above, since the kneading device according to claim 1 of the invention includes a pair of screw shafts provided with a helical portion and a plurality of mixing pins, it becomes possible to knead a raw material of high viscosity and a raw material of low viscosity and to continuously deliver a raw material mixture obtained from one end of the screw shafts to the other end by using the helical portion and the mixing pins.

A mixing pin is provided at the inside of the casing. Accordingly, the kneading process for the raw material may be effectively carried out in association with the mixing pins provided with the screw shafts.

The plurality of mixing pins provided with the pair of screw shafts are arranged at a height so that they overlap with each other between the pair of screw shafts. Accordingly, the kneading effect is improved by the overlap of the mixing pins.

An overlapping portion of the mixing pins between the pair of screw shafts is equal to or less than a half of the height of the mixing pin. Accordingly, it becomes possible to prevent the denaturing of the raw materials or the insufficient incorporation of air due to the generation of heat caused by excessive pressure applied to the raw materials during the kneading process of the raw material having high viscosity and the raw material having low viscosity.

The plurality of mixing pins are formed in a flat plate shape and are obliquely disposed with respect to a rotation axis of the screw shaft so that the surfaces of the mixing pins facing the other end of the screw shaft face the rotation direction of the screw shaft. Accordingly, it becomes possible to press the raw materials supplied between the screw shafts while the materials are kneaded, and hence, it becomes possible to continuously convey the raw material.

A cover for sealing the inside of the casing is provided with the casing so that 5 - 50% of the inside volume of the sealed space is empty. Accordingly, it becomes possible to prevent the denaturing of the raw materials or the insufficient incorporation of air due to the generation of excessive heat caused by such factors as friction during the kneading process.

## Claims

1. A kneading device which kneads a raw materiel of high viscosity and a raw material of low viscosity and continiously delivers a raw material mixture obtained, comprising:
a casing (2)
a pair of screw shafts (3,3) disposed parallel to each other in said casing; and,
a drive unit (4) to rotate said screw shafts, wherein a helical portion (12) is formed at one end of said pair of screw shafts so that said raw material is conveyed from one end of each of said pair of screw shafts to the other end, and
a plurality of mixing pins (13) is provided with the other end side of said screw shaft with regard to said helical portion in the circumferential direction of said screw shaft,
wherein at least one mixing pin is provided at the inside of said casing,
the plurality of mixing pins provided with said pair of screw shafts are arranged at a height so that they overlap with each other between said pair of screw shafts in such a manner that they do not interfere with each other,
an overlapping portion of the mixing pins between said pair of screw shafts is equal to or less than a half of the height of the mixing pin, **characterised in that**
said plurality of mixing pins are formed in a flat plate shape and are obliquely disposed with respect to a rotation axis of said screw shaft so that the surface of said mixing pins facing the other end of said screw shaft face the rotation direction of said screw shaft, and
a cover(6) for sealing the inside of said casing is provided with said casing so that 5-50% of the inside volume of the sealed space is empty.

2. A kneading device according to claim 1, wherein 20-45% of the inside volume of the sealed space is empty.

3. A kneading device according to claim 2, wherein 30-40% of the inside volume of the sealed space is empty.

## Patentansprüche

1. Knetvorrichtung, die ein Rohmaterial hoher Viskosität und ein Rohmaterial niedriger Viskosität knetet und kontinuierlich eine erhaltene Rohmaterialmischung liefert, umfassend:
ein Gehäuse (2);
ein Paar von Schraubenwellen (3, 3), die in dem Gehäuse parallel zueinander angeordnet sind; und
eine Antriebseinheit (4), um die Schraubenwellen zu rotieren, wobei an einem Ende des Paars von Schraubenwellen ein Schneckenbereich (12) ausgebildet ist, so dass das Rohmaterial von einem Ende jedes Paars von Schraubenwellen zum anderen Ende befördert wird, und
eine Vielzahl von Mischstiften (13) an der anderen Endseite der Schraubenwelle in Bezug auf den Schneckenbereich in Umfangsrichtung der Schraubenwelle vorgesehen sind,
wobei zumindest ein Mischstift an der Innenseite des Gehäuses vorgesehen ist,
die Vielzahl von Mischstiften, die an dem Paar Schraubenwellen vorgesehen sind, in einer Höhe so angeordnet sind, dass sie einander zwischen dem Paar von Schraubenwellen derart überlappen, dass sie sich nicht gegenseitig behindern,
ein überlappender Bereich der Mischstifte zwischen dem Paar von Schraubenwellen gleich der bzw. weniger als die halbe Höhe des Mischstiftes ist, **dadurch gekennzeichnet, dass**
die Vielzahl von Mischstiften in einer flachen Plattenform ausgebildet und in Bezug auf eine Rotationsachse der Schraubenwelle schräg angeordnet sind, so dass die Oberfläche der Mischstifte, die dem anderen Ende der Schraubenwelle gegenüberliegt, der Rotationsrichtung der Schraubenwellen gegenüberliegt, und
eine Abdeckung (6) zum Abdichten der Innenseite des Gehäuses so am Gehäuse vorgesehen ist, dass 5 bis 50% des Innenvolumens des abgedichteten Raums leer ist.

2. Knetvorrichtung nach Anspruch 1, wobei 20 bis 45% des Innenvolumens des abgedichteten Raums leer ist.

3. Knetvorrichtung nach Anspruch 2, wobei 30 bis 40% des Innenvolumens des abgedichteten Raums leer ist.

## Revendications

1. Dispositif de pétrissage qui pétrit une matière première présentant une viscosité élevée et une matière première présentant une faible viscosité et délivre de manière continué un mélange de matières premières obtenu, comprenant :
un boîtier (2),
une paire de tiges de vis (3, 3) disposées parallèlement entre elles dans ledit boîtier ; et
une unité d'entraînement (4) pour faire tourner lesdites tiges de vis, dans lequel une partie hélicoïdale (12) est formée à une extrémité de ladite paire de tiges de vis de sorte que ladite matière première est transportée à partir d'une extrémité de chacune de ladite paire de tiges de vis vers l'autre extrémité, et
on prévoit une pluralité de broches de mélange (13) à l'autre côté d'extrémité de ladite tige de vis par rapport à ladite partie hélicoïdale dans la direction circonférentielle de ladite tige de vis,
dans lequel au moins une broche de mélange est prévue à l'intérieur dudit boîtier,
on agence la pluralité de broches de mélange prévues avec ladite paire de tiges de vis à une hauteur de sorte qu'elles se chevauchent entre elles entre ladite paire de tiges de vis de manière qu'elles n'interfèrent pas les unes par rapport aux autres,
une partie de chevauchement des broches de mélange entre ladite paire de tiges de vis est égale ou inférieure à une moitié de la hauteur de la broche de mélange, **caractérisé en ce que :**
ladite pluralité de broches de mélange est formée selon une forme de plaque plate et est disposée de manière oblique par rapport à un axe de rotation de ladite tige de vis de sorte que la surface desdites broches de mélange faisant face à l'autre extrémité de ladite tige de vis fait face à la direction de rotation de ladite tige de vis, et
un couvercle (6) pour fermer hermétiquement l'intérieur dudit boîtier est prévu avec ledit boîtier de sorte que 5 - 50 % du volume intérieur de l'espace hermétiquement fermé est vide.

2. Dispositif de pétrissage selon la revendication 1, dans lequel 20 - 45 % du volume intérieur de l'espace hermétiquement fermé est vide.

3. Dispositif de pétrissage selon la revendication 2, dans lequel 30 - 40 % du volume intérieur de l'espace hermétiquement fermé est vide.
